Europäisches Patentamt

European Patent Office

Office européen des brevets

(11) Publication number: **0 177 758**
A1

# EUROPEAN PATENT APPLICATION

(21) Application number: 85111165.8

(51) Int. Cl.⁴: **B 60 R 9/04**

(22) Date of filing: **04.09.85**

(30) Priority: **01.10.84 IT 5387084 U**

(43) Date of publication of application: **16.04.86**
**Bulletin 86/16**

(84) Designated Contracting States: **DE FR GB SE**

(71) Applicant: **FIAT AUTO S.p.A., Corso Giovanni Agnelli 200, I-10135 Torino (IT)**

(72) Inventor: **Barbero, Mario, Via Ventimiglia, 98, I-10100 Torino (IT)**

(74) Representative: **Prato, Roberto et al, c/o Ingg. Carlo e Mario Torta Via Viotti 9, I-10121 Torino (IT)**

(54) **Device for fixing a carrier rack to a vehicle roof.**

(57) A device (4) is described for connecting a parcel rack (2) to a vehicle roof (3) without drip channels, in which the connection is made by a foot (6) with a L-shaped end (8) and connectable to the parcel rack, said foot being arranged to engage with a bracket (12) provided with a respective seat (18) and with respective shoulders (19) for said end (8), said bracket (12) being fixable to the side wall of the roof below the perimetral gasket (14) of the door aperture.

DEVICE FOR FIXING A CARRIER RACK TO A VEHICLE ROOF

This invention relates to a device for fixing a carrier rack, such as a parcel rack, ski rack or the like, to a vehicle roof of the type without lateral drip channels.

Carrier racks, such as parcel racks or the like, are fixed to a vehicle roof by respective connection feet which hook under and on to the lateral drip channels, and are put under tension by suitable means such as cams, screws or the like. In the case of vehicles with roofs which lack lateral drip channels for aerodynamic reasons, parcel racks either cannot be fitted or, at most, fixing devices have to be used provided with connection feet of such a size and shape as to be able to directly hook on to the longitudinal roof support member defined by a box beam formed in the body and usually bounding the door aperture. However this method has numerous drawbacks such as the large size of the fixing device, its low reliability, the possibility of damaging the vehicle door gaskets, and a reduction in their sealing efficiency towards external contaminants and water after the fixing device has been installed.

The object of the present invention is to provide a fixing device for parcel racks or the like suitable for use on vehicles without lateral drip channels, which is of low cost, of high efficiency, does not cause any alteration or damage to the gasket sealing properties, and is of small overall size.

Said object is attained according to the present invention by a device for fixing a carrier rack to a vehicle roof without lateral drip channels, characterised by comprising a bracket rigidly connectable to said roof and configured in such a manner as to be able to be inserted below the perimetral gasket of a door or window aperture of said vehicle, between said gasket and a side wall of said roof which faces said gasket, and a connection foot which can be rigidly connected to said carrier rack and is configured substantially with a L-shaped free end; said bracket being provided with at least one respective seat for housing said L-shaped end of said connection foot and with respective shoulders therefor, both towards the top of said roof and towards said side wall of the roof.

Further objects and advantages of the present invention will be apparent from the detailed description given hereinafter of two nonlimiting embodiments thereof with reference to the accompanying drawings, in which:

Figure 1 is a diagrammatic cross-section through the upper portion of a vehicle provided with a parcel rack fixed by the fixing device according to the invention;

Figure 2 is a detail of the fixing device of the invention to an enlarged scale;

Figure 3 is a longitudinal view of a further detail of the device of the invention; and

Figures 4 and 5 are a cross-sectional view and a longitudinal view respectively of a possible modification of the fixing device according to the invention.

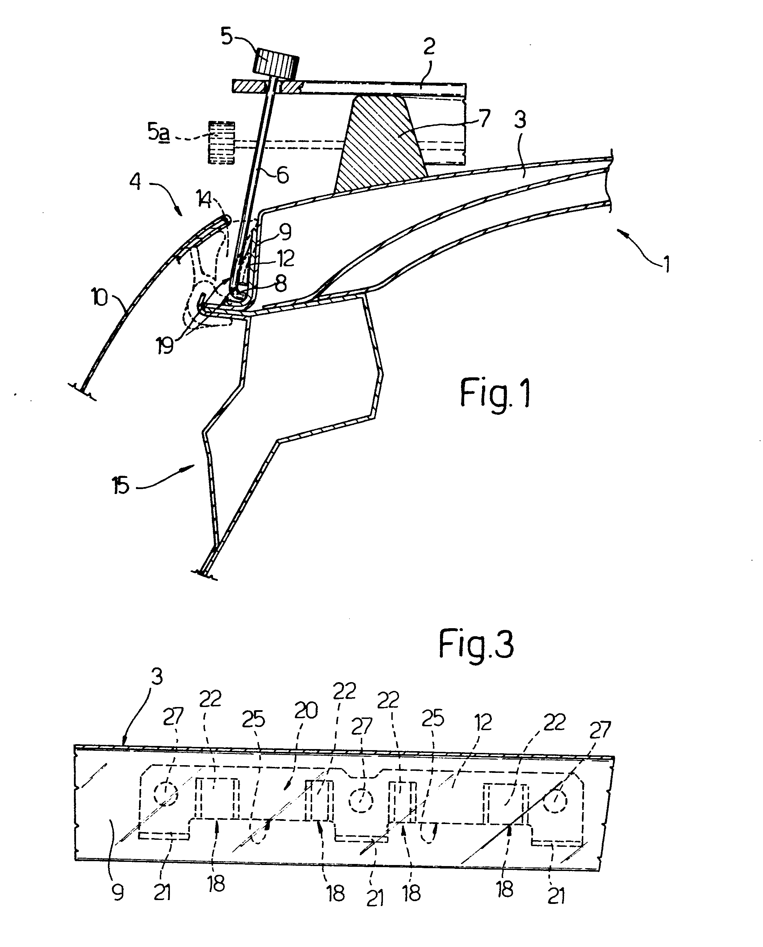

In Figure 1, a vehicle shown only partly and indicated overall by the reference numeral 1 is provided with a parcel rack 2 of known type, shown only diagrammatically, which is fixed rigidly to a roof 3 by means of a fixing device 4 lockable in known manner by a tensioning device 5 or 5a (indicated by dashed lines), both of known type, and constituted for example by a suitable threaded tie rod, and arranged to act on one and the same element 6 forming part of the device 4 and constituted by a connection foot which can be secured in any known manner to the parcel rack 2, for example by means of said tensioning devices 5 or 5a. The parcel rack 2 is of the type provided with support blocks 7 arranged to cooperate directly with the roof 3, and the devices 5 and 5a are arranged to pull the element 6 respectively upwards or towards the side of the vehicle, in the direction of the arrows. The connection foot 6 is provided with a substantially L-shaped free end 8, arranged for insertion between a side wall 9 of the roof 3 and a door 10 of the vehicle 1. The device 4 is completed by a bracket 12 which can be rigidly fixed to the roof 3 in any convenient manner, for example by screws or rivets, or by welding or glueing, and is shaped so as to be insertable below a perimetral gasket 14 of a door aperture 15 of the vehicle 1, or a window aperture thereof, not shown for simplicity, and bounded towards the roof 3 by the side wall 9 thereof. The bracket 12 comprises, according to the invention, at least one respective seat 18 for housing the end 8, and is provided with respective shoulders for this latter, indicated by 19, both towards the top of the roof 3 and towards the side wall 9 thereof, so that said device 4 can be used whether the parcel rack is provided with a tenisoning and locking device of the same type as the device 5, or of the same type as the device 5a.

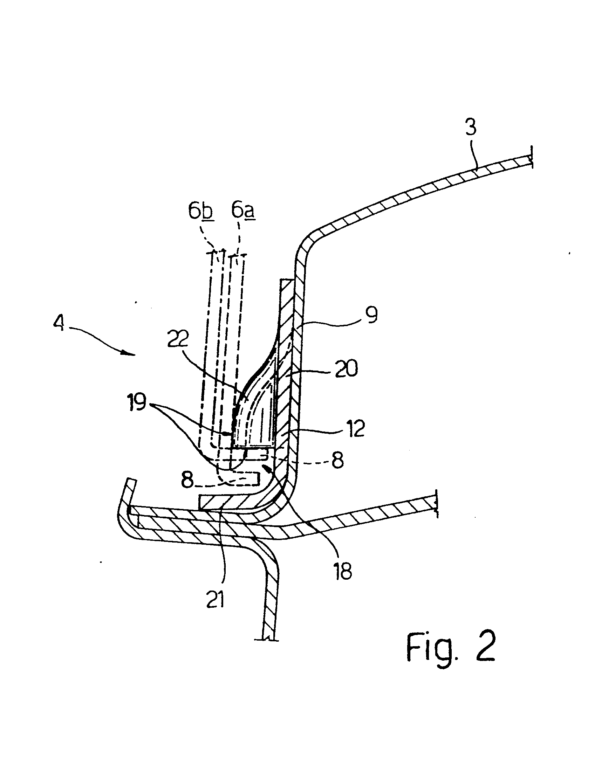

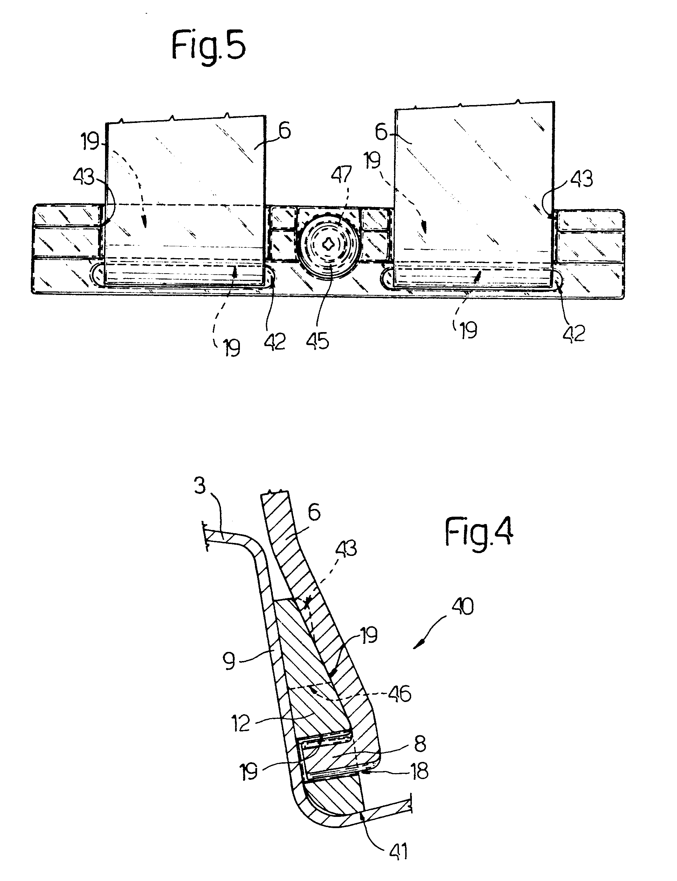

According to the preferred embodiment shown in Figures 2 and 3 to an enlarged scale, the bracket 12 is constituted by a pressed metal plate of elongated form and with a cross-sectional profile (Figure 2) substantially of L-shape, so that it is divided into two flat portions or flanges 20 and 21 respectively, which are disposed at a right angle to each other. The portion 20 of the plate 12, which is arranged to cooperate with the side wall 9 by resting against it, is provided with at least one semi-punched boss 22 extending from the region of the other portion or flange 21 and towards the perimetral gasket 14, said boss 22 defining towards the portion or flange 21 said seat 18 for housing the end 8 of the connection foot 6. As shown in Figure 2, if the parcel rack or carrier rack 2 is provided with a clamping device 5, the device 4 of the invention comprises the bracket or plate 12 and a connection foot 6a configured as shown in the figure, its end 8 abutting against the lower punched-out edge of the boss 22 defining one of the shoulders 19. If however the parcel rack or carrier rack 2 is provided with a clamping device 5a, the device 4 of the invention comprises the bracket 12 and a connection foot 6b configured as in Figure 2, its end 8 extending into contact with the flange or portion 21 and abutting against the other shoulder 19, constituted by the rear of the boss 19 facing the gasket 14. Preferably, in positions corresponding with the seats 18 the bracket or plate 12 is provided with respective cut-outs 25 arranged to allow introduction of the end 8 under the bosses 22 and to interrupt the continuity of the flange or portion 21, which thus becomes divided into three separate elements. In positions corresponding with these, the plate or bracket 12 is preferably provided with zones 27 by means of which it can be fixed by spot or projection welding against the side wall 9 of the roof 3. Figures 4 and 5 show a possible modification 40 of the described device 4. For simplicity, those details which are similar and equal to the details already described are indicated by the same reference numerals. In particular, the bracket 12 of the device 40 is of plastics construction and is configured substantially as a flat elongated plate provided longitudinally in proximity to its lower edge 41, which is at the end distant from the roof 3, with one or more (for example two) slots 42 (Figure 5) formed through said plate or bracket 12. In positions corresponding with the slot or slots 42, the plate 12 is provided with respective recesses 43 arranged to receive the ends 8 of the connection feet 6 and bounded towards the side wall 9 by respective oblique frontal surfaces 19 defining one of said shoulders. The slots 42 define the housing seats 18 for the end 8, and the upper edges of the slots 42 define the other shoulders 19 of the bracket 12. This latter is fixed against the side wall 9 preferably by means of a screw 45 insertable through a respective transverse through bore 46 in the bracket 12 and screwable into an internally threaded bush 47 (Figure 5) defined for example by a screw anchor, which can be inserted into a corresponding hole, not shown for simplicity, formed through the side wall 9 of the roof 3.

The advantages of the fixing device according to the present invention are apparent from the aforegoing description. In this respect, whatever the type of clamping device 5 for the carrier rack 2, this latter can always be effectively fixed to the roof 3 in that the connection bracket of the device according to the invention is provided with two sets of shoulders 19 mutually disposed in substantially orthogonal planes, so as to ensure that the end 8 becomes locked in the seats 18, whether the feet 6 are pulled by the tensioning device in a direction substantially orthogonal to the roof 3 (device 5), or whether they are pulled towards the side walls 9 thereof (device 5a). Furthermore, the described device is of small overall size and extremely simple, and when the parcel rack has been demounted it is completely invisible in that the brackets 12 are hidden by the gaskets 14, and in addition the fact that the brackets 12 are fixed directly on to the roof 3 prevents any loss of sealing efficiency of said gaskets 14.

Finally, from the description it is apparent that modifications can be made to the described devices without leaving the scope of the present invention.

PATENT CLAIMS

1.     A device (4) for fixing a carrier rack (2) to a vehicle roof (3) without lateral drip channels, characterised by comprising a bracket (12) rigidly connectable to said roof (3) and configured in such a manner as to be able to be inserted below the perimetral gasket (14) of a door aperture (15) or window aperture of said vehicle, between said gasket (14) and that side wall (9) of said roof (3) which faces said gasket, and a connection foot (6) which can be rigidly connected to said carrier rack (2) and is configured substantially with a L-shaped free end (8); said bracket (12) being provided with at least one respective seat (18) for housing said L-shaped end (8) of said connection foot and with respective shoulders (19) therefor, both towards the top of said roof (3) and towards said side wall (9) of the roof.

2.     A device (40) as claimed in claim 1, characterised in that said bracket (12) is of plastics construction and is configured substantially as a flat elongated plate, said seat (18) and said shoulders (19) being defined respectively by a longitudinal slot (42) formed through said bracket (12), and by an oblique surface of the bracket (12) together with the upper edge of said slot (42).

3.     A device (40) as claimed in claim 2, characterised by further comprising at least one internally threaded bush (47) insertable into a hole formed in said side wall (9) of the roof (3), and at least one screw (45) insertable through a respective bore (46) in said bracket (12) and engageable with said bush (47) in order to lock said bracket (12) against said side wall (9) of the roof.

4.     A device (4) as claimed in claim 1, characterised in that said bracket (12) is constituted by a pressed metal plate of elongated form and with a profile substantially of L-shape so as to be divided into two flat portions (20, 21) disposed at a right angle to each other; said plate (12) being provided on one of said portions (20), namely that which is to cooperate with said side wall (9) of the roof, with at least one semi-punched boss (22) directed towards said gasket (14) and defining said seat (18).

5. A device (4) as claimed in claim 4, characterised in that said shoulders (19) are defined by the back of said boss (22) and by the lower punched edge thereof, said bracket (12) being rigidly fixable to said roof (3) by spot welding.

0177758

Fig.1

Fig.3

0177758

6b 6a

3

4

22

9

20

19

12

8

8

18

21

Fig. 2

Fig.5

Fig.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | GB-A-2 069 420 (FORD)<br>* Page 2, lines 8-22; figures 7,8 * | 1 | B 60 R 9/04 |
| A | | 2,3 | |
| | --- | | |
| Y | FR-A-2 345 313 (LA PREALPIN)<br>* Claim 1; page 1, lines 27-32; figure 1 * | 1 | |
| | --- | | |
| A | DE-A-2 933 718 (AUDI)<br>* Page 6, lines 10-17; figures 1,2 * | 1,5 | |
| | --- | | |
| A | US-A-2 119 051 (LE BOEUF)<br>* Figure 3 * | 1,4,5 | TECHNICAL FIELDS SEARCHED (Int. Cl.4) |
| | ----- | | B 60 R 9/04 |

The present search report has been drawn up for all claims

| Place of search | Date of completion of the search | Examiner |
|---|---|---|
| THE HAGUE | 06-01-1986 | SCHMITTER J.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82